**Europäisches Patentamt**

**European Patent Office**

**Office européen des brevets**

(11) Veröffentlichungsnummer: **0 150 274**
**B1**

(12) **EUROPÄISCHE PATENTSCHRIFT**

(45) Veröffentlichungstag der Patentschrift:
**17.11.88**

(51) Int. Cl.⁴: **G 01 M 1/22**

(21) Anmeldenummer: **84112693.1**

(22) Anmeldetag: **10.09.81**

(60) Veröffentlichungsnummer der früheren Anmeldung
nach Art. 76 EPÜ: **0074416**

(54) **Verfahren zum Übertragen der gemessenen Lage der Unwucht eines auszuwuchtenden Rotors auf dessen Umfang und Vorrichtung hierzu.**

(43) Veröffentlichungstag der Anmeldung:
**07.08.85 Patentblatt 85/32**

(45) Bekanntmachung des Hinweises auf die Patenterteilung:
**17.11.88 Patentblatt 88/46**

(84) Benannte Vertragsstaaten:
**DE FR GB IT**

(56) Entgegenhaltungen:
**US - A - 4 193 305**

(73) Patentinhaber: **CARL SCHENCK AG,
Landwehrstrasse 55 Postfach 40 18, D-6100 Darmstadt
(DE)**

(72) Erfinder: **Giers, Alfred, Dipl.-Ing., Messeler Weg 12,
D-6101 Rossdorf (DE)**

(74) Vertreter: **Dallhammer, Herbert, Dipl.-Ing., CARL
SCHENCK AG Patentabteilung
Postfach 4018 Landwehrstrasse 55, D-6100 Darmstadt
(DE)**

ACTORUM AG

**Beschreibung**

Die Erfindung betrifft ein Verfahren nach dem Oberbegriff des Anspruchs 1 und eine Auswuchtmaschine zur Durchführung dieses Verfahrens gemäß Oberbegriff des Anspruchs 5.

Durch die DE-A 25 48 729 ist ein Verfahren zur Ermittlung und Anzeige der Winkellage der Unwucht bei Auswuchtmaschinen mit Winkelanzeige, insbesondere bei gelenkwellenlosem Antrieb des auszuwuchtenden Körpers bekannt geworden, das sich dadurch auszeichnet, daß der Unwuchtwinkel in Längeneinheiten oder in dimensionslosen Einheiten, die jeweils auf einen Umfang oder eine charakteristische Teilung des auszuwuchtenden Körpers beziehbar sind und einen Bereich von 360° erfassen, umgewandelt und/oder in solchen Einheiten angezeigt werden. Auch ist eine Einrichtung hierzu bekannt geworden, die sich auszeichnet durch Mittel zur Umformung des gemessenen Winkelwertes durch mindestens eine Rechengrösse und/oder eine Anzeigeeinrichtung für Längeneinheiten und/oder dimensionslose Einheiten. Es wird hierbei aus einem ersten ein Mass für den Umfang des Rotors in der Ausgleichsebene in dimensionslosen Einheiten darstellenden Zahlenwert sowie aus der ermittelten Winkellage ein zweiter Zahlenwert gebildet, der die Lage der Unwucht bezüglich der Referenzposition in den genannten Einheiten wiedergibt, d.h.

$$\frac{\varphi°}{360°} \times Z\,max.$$

Hiermit wird auf dem Gebiet des Auswuchtens die Übertragung von gemessenen Unwuchtwinkeln auf einen auszugleichenden Rotor dadurch ermöglicht, daß der Unwuchtwinkel umgewandelt wird in ein Längenmaß, welches von einem am untersuchten Körper angeordneten Nullpunkt beginnend am Umfang des Körpers angelegt mit seinem Endpunkt die Unwuchtwinkellage markiert, an der dann ein entsprechender Unwuchtausgleich stattfinden kann. Auch ist es möglich, wie in dieser Offenlegungsschrift offenbart, ein Zahlenband an den Rotationskörper anzulegen und dieses Zahlenband, wenn es in einem Verhältnis zu einer bestimmten Nullstelle des Rotationskörpers steht, mit Hilfe des angezeigten Übertragungswertes zur Auffindung der Unwuchtwinkellage heranzuziehen.

Damit läßt sich bei Körpern, die an ihrem Umfang von der Fertigung her bereits Markierungen tragen oder die mit einem Zahlenband versehen werden, der angezeigte Unwuchtwinkel auf den Körper übertragen. Die genannte Offenlegungsschrift offenbart auch anstelle eines am zu untersuchenden Körper anzubringenden Zahlenbandes den Unwuchtwinkel auch an einer Tragrolle zu ermitteln, da diese in einem bestimmten Verhältnis zum Lagerzapfen des auszuwuchtenden Körpers steht. Hierzu ist es allerdings ebenfalls erforderlich, an der Tragrolle eine Winkelskala anzubringen.

Die Vorbereitung des Wuchtkörpers selbst, beispielsweise durch Anlegen eines Zahlenbandes, welches in Übereinstimmung mit einer am auszuwuchtenden Körper anzubringenden Nullmarke gebracht werden muß, oder das Anbringen einer Winkelskala auf einer Tragrolle für den auszuwuchtenden Rotor, die im allgemeinen nur schwer zugänglich ist und darüber hinaus nicht immer fehlerfrei abgelesen werden kann, erfordern einen beachtlichen Zeitaufwand, insbesondere dann, wenn es sich um Rotationskörper mit verschiedenem Durchmesser des Rotationskörpers selbst oder des Zapfens des Rotationskörpers handelt. Auch ist in diesem Fall stets ein erneutes Einstellen des Verhältnisses zwischen dem Radius der Tragrolle und dem Radius des Zapfens, was zu einer neuen Anzeigenskala führt, an der dann der Unwuchtwinkel zunächst abgelesen und anschließend auf den Rotationskörper übertragen werden muß, erforderlich. Es lassen sich durch die mehreren manuellen Tätigkeiten des Ablesens und Abmessens Fehler in der Genauigkeit der Übertragung des Unwuchtwinkels auf den zu untersuchenden Körper nicht vermeiden.

In der zum Stand der Technik gemäß Art. 54/3 EPÜ gehörenden EP-A-00 45 505 wird eine Einrichtung zur automatischen Auffindung der Unwuchtwinkellage eines Rotors und dem gleichzeitigen positionierten Anhalten dieser Lage in einer vorbestimmten Winkelposition beschrieben, wobei diese Einrichtung folgendes enthält: zwei Lager zur drehbaren Lagerung der Enden des zu prüfenden Körpers; einen Antriebsmotor mit Motorkontrolleinrichtungen; Mittel zur Antriebsübertragung zwischen Motor und gelagertem Körper; Schwingungsaufnehmer, die mit mindestens einem Lager verbunden sind und die pro Umdrehung die Schwingungsbewegung oder die Krafteinwirkung aufnehmen, die als Schwingungssignal der dynamischen Unwucht des Rotors entsprechen; eine Pulsformerschaltung, um einen Phasenbezug des Schwingungssignals zu einer Referenzwinkellage herzustellen; einen Pulsgenerator, um Winkelimpulse mit vorgegebenem Abstand zur Bestimmung der Rotation des Körpers abzugeben; einen voreinstellbaren Zähler, in dem eine Zahl

$$\frac{(2n \times \varphi + \alpha)}{a}$$

voreingestellt wird, wobei n die Meßdrehzahl des Rotors, $\alpha$ der Winkel zwischen der vorbestimmten Stopwinkellage und der Referenzlage ist und a der Impulsabstand ist; Mittel zur Erzeugung eines Bremssignals, welches den Motorkontrollmitteln zur Bremsung des Motors zugeführt wird; Mittel, die verbunden sind mit der Pulsformerschaltung und Bremssignalerzeugung und zur Übertragung der Winkelimpulse zum voreingestellten Zähler nach Erhalt des auf das Bremssignal folgenden Phasenbezugs und daß der voreingestellte Zähler ein Signal abgibt zum Abschalten des Antriebsmotors, wenn das Phasensignal die vorgegebene Zahl erreicht hat, wobei der Antriebsmotor augenblicklich abgebremst wird, so daß die unwuchtige Stelle des Rotors an der vorbestimmten Stelle zur Ruhe kommt.

Ausgehend von dem durch die DE-A 2 548 729 bekannt gewordenen Stand der Technik liegt der vorliegenden Erfindung die Aufgabe zugrunde, unter Vermeidung der geschilderten Schwierigkeiten eine genaue Winkelübertragung von Unwuchtwinkelwerten auf den Rotor selbst zu erreichen, ohne daß eine Zwangssynchronisation zwischen Rotor und Auswuchtmaschine erforderlich ist, ein Bezugssignal für die Unwuchtmessung zu erzeugen und eine Bestimmung der Größe der Unwucht zu ermöglichen. Diese Aufgabe wird durch die im Kennzeichen des Anspruchs 1 enthaltenen Merkmale gelöst. Diese Lösung zeichnet sich insbesondere dadurch aus, daß ohne Umrüsten auf einen abzählbaren Rotor ein glatter Rotor durch die Darstellung seines Umfangs mittels Impulsen sowohl die Unwuchtungsmessung selbst aus der die Unwucht nach Lage und Grösse festgestellt wird, als auch die Übertragung des gemessenen Unwuchtwinkels auf den Umfang des Rotors in einer Ausgleichsebene ermöglicht. Auch ist es nicht erforderlich, wenn eine Tragrolle oder bei Verwendung eines Bandantriebes die Umlenkrolle oder der Antriebsmotor für den Bandantrieb als Träger für den Impulsgeber verwendet wird, diesen zusätzlich mit einer Markierung zu versehen.

Zufolge Zählung der bis zum Stillstand noch erfolgten Umläufe ist in Ausgestaltung der erfinderischen Verfahren (vgl. hierzu den Anspruch 2) ein Auffinden des Unwuchtwinkels am zu untersuchenden Rotor jederzeit mit Hilfe der gespeicherten, dem Umfang des Rotors entsprechenden Impulsserie möglich.

Eine Ausgestaltung der Erfindung wird mit den kennzeichnenden Merkmalen des Anspruchs 3 vorgeschlagen. Bei einer Überwachung der Abstände der Einzelimpulse voneinander ist gleichzeitig eine Überwachung im Hinblick auf die Abweichung zwischen dem tatsächlichen Umfang des Rotors und dem durch die Impulse dargestellten Umfang des Rotors möglich.

Eine noch weitere Ausgestaltung des erfinderischen Verfahrens wird in den kennzeichnenden Merkmalen des Anspruchs 4 vorgeschlagen. Durch die Vorgabe der Meßdrehzahl ist eine Beeinflussung der Umläufe bis zum Stillstand des Rotors möglich, und es ist auch eine genaue Überwachung des Übertragungsvorganges gegeben.

Das zur Lösung der der Erfindung zugrunde liegenden Aufgabe offenbarte Verfahren gemäß Anspruch 1 ist auf einer Auswuchtmaschine mit den im Kennzeichen des Anspruchs 5 offenbarten Merkmalen durchführbar. Diese Auswuchtmaschine zeichnet sich insbesondere dadurch aus, daß ein Impulsgeber verwendet werden kann, der eine Impulsfolge abgibt, die mit Hilfe eines Zählers den Umfang einer Ausgleichsebene des zu untersuchenden Rotors abbildet; auch wird hierdurch ein Bezugssignal für die Unwuchtmessung gewonnen. Damit ist eine derartige Auswuchtmaschine insbesondere geeignet, wenn eine Vielzahl gleicher Rotationskörper ausgewuchtet werden sollen, jedoch auch für Rotationskörper einsetzbar, die verschiedenen Umfang der Ausgleichsebene aufweisen, wenn die aus der Impulsfolge des Gebers gewonnene Anzahl der Impulse einstellbar ist auf den Umfang des jeweiligen zu untersuchenden Rotors ist auch hier ein eindeutiges Eindrehen möglich.

Eine Ausgestaltung wird mit den kennzeichnenden Merkmalen des Anspruchs 6 vorgeschlagen. Durch die Wahl des Impulsabstandes wird in besonders einfacher Weise eine Anpassung an die geforderte Winkelauflösung ermöglicht.

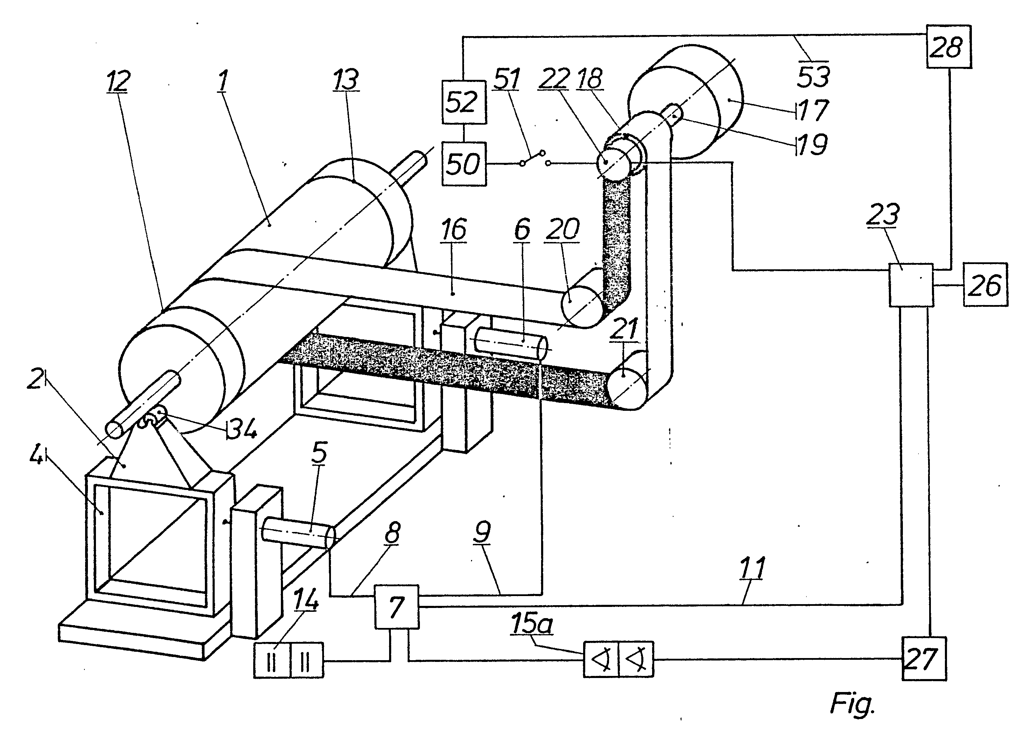

In der nachfolgenden Beschreibung wird anhand des in der Zeichnung dargestellten Ausführungsbeispiels die Erfindung näher erläutert.

Die Figur zeigt in schematischer Darstellung:

eine Auswuchtmaschine mit einem auf den Umfang des Rotors abgestimmten Impulsgeber zur Übertragung der Unwuchtwinkellage auf den zu untersuchenden Rotor.

Die Figur stellt eine Übertragung des Unwuchtwinkels bei Darstellung des Umfangs der Ausgleichsebene 12 bzw. 13 des zu untersuchenden Rotors 1 mittels Impulsen dar, wobei die Impulse selbst voneinander einen konstanten Abstand besitzen, vorzugsweise kleiner als drei Winkelgrad.

Der Rotor 1 ist in einer Auswuchtmaschine, die Tragrollenlagerungen 2 für den Rotorzapfen 3 besitzt, rotierbar gelagert. Die Tragrollenlagerung 2 stützt sich auf einer Einheit 4 für jeden Rotorzapfen 3 ab. Meßumformer 5, 6 wandeln die zufolge einer Unwucht auftretenden Schwingungen oder Kräfte an den Einheiten 4 in elektrische Signale um.

Der zu untersuchende Rotor 1 wird von einem Band 16, welches den Rotor teilweise umschlingt, angetrieben (der Übersichtlichkeit halber wurde das Band um 80° in die Horizontale verschwenkt). Das Band 16 wird von einem Antriebsmotor 17, der eine Antriebsscheibe 18 auf einer Welle 19 trägt, über eine Spannrolle 20 und eine Umlenkrolle 21 angetrieben. Mit der Antriebsscheibe 18 ist ein Impulsgeber 22 verbunden, der je Umlauf der Antriebsscheibe 18 eine Impulsfolge an einen Zähler 23 weitergibt, in dem die Impulse gezählt werden.

Anstelle des dargestellten Bandantriebs kann auch ein Antrieb über Tragrollen 34 der Tragrollenlagerung 2 erfolgen, wobei in diesem Falle der Impulsgeber 22 dann in entsprechender Weise an der Tragrolle 34 angeordnet werden müßte. Auch können die Spannrolle 20 oder die Umlenkrolle 21 oder der Antriebsmotor 17 selbst als Träger für den Impulsgeber 22 dienen.

Im Speicher 26 ist eine feste Zahl gespeichert, die der Zahl der Impulse entspricht, die den Umfang des zu untersuchenden Rotors 1 in der Ausgleichsebene 12, 13 repräsentiert. Nach Erreichen der Meßdrehzahl wird der Stand des Zählers 23 fortlaufend mit dem Inhalt des Speichers 26 verglichen. Bei Gleichheit wird der Zähler 23 zurückgesetzt, erneut gestartet und gleichzeitig dieses Rücksetzsignal der Auswerteeinheit 7 zugeführt. Dort wird aus den über die Leitungen 8 und 9 kommenden Informationen zusammen mit der über die Leitung 11 vom Zähler kommenden Information die Unwucht nach Winkellage und -größe dargestellt und die Größe der Unwucht im Anzeigegerät 14 angezeigt oder direkt weiterverarbeitet.

Vor Einleitung des Bremsvorganges für den zu untersuchenden Rotor 1 wird die Unwuchtgröße im Anzeigegerät 14 und die Winkelinformation im Anzeigegerät 15a gespeichert und im Moment der Speicherung der weitere Schalter 51 geschlossen. Während des Auslaufs des zu untersuchenden Rotors ist von einem weiteren Impulszähler 50, der über den weiteren Schalter 51 nach dem Meßvorgang eingeschaltet wird, die Anzahl der Impulse bis zum Stillstand des zu untersuchenden Rotors 1 speicherbar. Damit wird über eine Korrektureinheit 52 und eine Leitung 53 dem Indikator 28, der während des Auslaufs kumulierte Winkelfehler zugeführt und korrigiert somit die tatsächliche Nullstellung, also den Fehler zwischen tatsächlichen Umfang des zu untersuchenden Rotors an seinen Ausgleichsebenen und dem durch Impulszählung dargestellten Umfang.

Nach Stillsetzen des zu untersuchenden Rotors wird dieser solange gedreht, bis der Indikator 28 die Nullstellung des Zählers 23 anzeigt. Damit befindet sich die Unwucht in der für den Ausgleich erforderlichen Winkellage.

Die Winkelinformation aus der Auswerteeinheit 7 wird in einem Winkelspeicher 15a gespeichert und mit dem Inhalt des Zählers 23 über die Vergleichseinheit 27 verglichen.

Im Falle gleich ablaufenden Auslaufvorgangs des zu untersuchenden Rotors 1 kann der nötige Winkelkorrekturwert auch ohne Zähler 50 erfolgen. In diesem Fall wird der Korrektureinheit 52 lediglich ein empirischer Wert für die Winkelkorrektur fest eingegeben.

## Patentansprüche

1. Verfahren zum Übertragen der gemessenen Winkellage der Unwucht eines auszuwuchtenden Rotors (1) auf dessen Umfang in einer Ausgleichsebene und zur Bestimmung der Unwuchtgröße, bei dem
   – der Rotor (1) in einer Auswuchtmaschine, die keine mit dem Rotor (1) synchron umlaufenden Teile aufweist, in Rotation versetzt wird
   – die Winkellage der Unwucht ermittelt wird
   – aus einem ersten ein Maß für den Umfang des Rotors in der Ausgleichsebene in dimensionslosen Einheiten darstellenden Zahlenwert sowie aus der ermittelten Winkellage ein zweiter Zahlenwert gebildet wird, der die Lage der Unwucht in den genannten Einheiten angibt, dadurch gekennzeichnet, daß
   – zur Ermittlung des ersten Zahlenwertes ein mit dem Rotor (1) gekoppelter Impulsgeber (22) eine äquidistante Impulsfolge erzeugt, die Zählung der Impulse nach einer festgelegten Anzahl von Impulsen, die einem Umlauf des zu untersuchenden Rotors (1) entsprechen, durch einen Stopp-/Start-Impuls beendet und erneut begonnen wird
   – der Stopp-Impuls gleichzeitig als Bezugssignal für eine Verarbeitung der die Unwuchtgröße und die Unwuchtwinkellage beinhaltenden Meßsignale dient
   – die aus der Verarbeitung gewonnene Winkellage der Unwucht dimensionslos und die Größe der Unwucht gespeichert wird
   – der Antrieb des zu untersuchenden Rotors abgeschaltet wird, der Rotor bei Gleichheit zwischen der festgelegten Anzahl und den gezählten Impulsen stillgesetzt wird und
   – der Rotor nach dem Stillsetzen nachträglich noch so weit verdreht wird, bis die Zählimpulse gleich der gespeicherten dimensionslosen Winkellage sind.

2. Verfahren nach Anspruch 1, dadurch gekennzeichnet, daß die Anzahl der Umläufe des zu untersuchenden Rotors (1) bis zu dessen Stillstand gezählt werden.

3. Verfahren nach Anspruch 1 und/oder 2, dadurch gekennzeichnet, daß der Abstand der Impulsfolge überwacht wird.

4. Verfahren nach einem oder mehreren der vorhergehenden Ansprüche, dadurch gekennzeichnet, daß die Drehzahl des Rotors (1) während der Ermittlung der Unwucht bis zum Stillstand überwacht wird.

5. Auswuchtmaschine zur Durchführung des Verfahrens nach einem oder mehreren der Ansprüche 1 bis 3 mit
   – einer Rotorlagerung (2, 4)
   – einem Rotorantrieb (16–21), der keine synchron mit dem auszuwuchtenden Rotor (1) umlaufenden Teile besitzt
   – Meßumformern (5, 6) zur Erzeugung von den Einfluß der Unwucht auf die Rotorlagerung repräsentierenden Meßsignalen
   – einer Auswerteschaltung (7) zur Ermittlung der Winkellage und Größe der Unwucht, gekennzeichnet durch
   – einen mit dem auszuwuchtenden Rotor (1) gekoppelten Impulsgeber (22) zur Erzeugung einer dem Drehwinkel des Rotors (1) entsprechenden äquidistanten Impulsfolge
   – einen Vorwärts-/Rückwärts-Zähler (23), dessen Zähleingang die Impulse des Impulsgebers (22) zugeführt werden
   – einem ersten Speicher (26), in dem eine feste Zahl gespeichert ist, die der Zahl der Impulse entspricht, die den Umfang des zu untersuchenden Rotors (1) in der Ausgleichsebene (12, 13) repräsentiert
   – eine Verbindung zwischen dem Ausgang des Zählers (23) und dem ersten Speicher (26) zum Rücksetzen des Zählers (23) bei Erreichen der im ersten Speicher (26) gespeicherten Impulszahl und Weitergabe des Rücksetzsignals an die Auswerteschaltung (7) und zum erneuten Start des Zählers (23)
   – eine Verbindung zwischen der Auswerteschaltung (7), in der die Unwucht nach Lage und Größe bestimmt wird mit einem zweiten Speicher (14) mit Anzeige für die Unwuchtgröße je Ebene und mit einem dritten Speicher (15a) mit Anzeigen für die Winkellage der Unwucht je Ebene
   – einen Schalter (51) über den nach Speicherung der Werte in den zweiten und dritten Speichern (14, 15a) und Ausschalten des Antriebsmotors (17) ein weiterer Impulszähler (50), der mit einer Korrektureinheit (52) verbunden ist, eingeschaltet wird
   – eine Verbindung (53) des Ausgangs der Korrektureinheit (52) mit einem Indikator (28) zur Kompensation des Fehlers, des sich aus einem evtl. Unterschied zwischen dem im ersten Speicher (26) vorgegebenen Zählerstand und dem tatsächlichen Umfang des Rotors (1) in den Ausgleichsebenen ergibt
   – eine Verbindung zwischen dem Indikator (28) und dem Zähler (23), wodurch der Rotor (1) bei Gleichheit der Werte im Zähler (23) und im Indikator (28) stillgesetzt wird und

– eine weitere Verbindung des Zählers (23) mit dem dritten Speicher (15a) für die Unwuchtwinkellage über eine Vergleichseinheit (27), in der beim nachfolgenden Eindrehen des Rotors (1) in die Unwuchtlage der Inhalt des Zählers (23) mit dem dritten Speicher (15a) verglichen wird, und bei Gleichheit der Werte der Rotor (1) in die Unwuchtlage eingedreht ist.

6. Auswuchtmaschine nach Anspruch 5, dadurch gekennzeichnet, daß der Impulsgeber (22) so angeordnet und ausgebildet ist, daß die von ihm gelieferten Impulse im Abstand von weniger als drei Winkelgradsdrehung des Rotors (1) auftreten.

## Claims

1. A method of transferring the measured angular position of the unbalance of a rotor to be balanced (1), to its periphery in a correction plane and of determining the amount of the unbalance, in which

– the rotor (1) is set in rotation in a balancing machine, which does not have any parts rotating synchronously with the rotor (1)

– the angular position of the unbalance is determined

– from a first numeric value representing a measure for the periphery of the rotor in the correction plane in dimensionless units and from the angular position which is determined, a second numeric value is formed which indicates the position of the unbalance in the said units, characterised in that

– in order to determine the first numeric value a pulse generator (22) coupled to the rotor (1) produces an equidistant pulse train, counting the pulses is terminated and begun again by a stop/start pulse after a fixed number of pulses, which correspond to a revolution of the rotor (1) to be examined

– the stop pulse at the same time serves as the reference signal for processing the measurement signals which include the amount of the unbalance and the angular position of the unbalance

– the angular position of the unbalance which is obtained from processing is stored in a dimensionless manner and the amount of the unbalance is stored

– the drive of the rotor to be examined is switched off, the rotor is stopped when the fixed number and the counted pulses are the same and

– after stopping the rotor is subsequently rotated until the counting pulses are equal to the stored dimensionless angle position

2. A method according to claim 1, characterised in that the number of revolutions of the rotor (1) to be examined is counted until said rotor is at a standstill.

3. A method according to claim 1 and/or 2, characterised in that the interval of the pulse train is monitored.

4. A method according to one or more of the preceding claims, characterised in that the rotational speed of the rotor (1) is monitored while determining the unbalance until (the rotor) reaches a standstill.

5. A balancing machine for carrying out the method according to one or more of claims 1 to 3 having:

– a rotor bearing (2, 4)

– a rotor drive (16 to 21), which does not have any parts rotating synchronously with the rotor (1) to be balanced

– measurement converters (5, 6) for producing measurement signals which represent the effect of the unbalance on the rotor bearing

– an evaluation circuit (7) for determining the angular position and amount of the unbalance, characterised by:

– a pulse generator (22), coupled to the rotor (1) to be balanced, for producing an equidistant pulse train corresponding to the angle of rotation of the rotor (1)

– a forward/backward counter (23), to the counter input of which the pulses of the pulse generator (22) are supplied

– a first store (26), in which a fixed number is stored which corresponds to the number of pulses which represents the periphery of the rotor (1) to be examined in the correction plane (12, 13)

– a connection between the output of the counter (23) and the first store (26) for resetting the counter (23) when the number of pulses stored in the first store (26) is reached and passing on the resetting signal to the evaluation circuit (7) and for restarting the counter (23)

– a connection between the evaluation circuit (7), in which the unbalance is determined according to position and amount, with a second store (14) with display for the amount of the unbalance for each plane and with a third store (15a) with displays for the angle position of the unbalance for each plane

– a switch (51), via which and after storing the values in the second and third stores (14, 15a) and disconnecting the drive motor (17), a further pulse counter (50), which is connected to a correction unit (52) is switched on

– a connection (53) of the output of the correction unit (52) with an indicator (28) for compensating the error, which arises from a possible difference between the counter state present in the first store (26) and the actual periphery of the rotor (1) in the correction planes

– a connection between the indicator (28) and the counter (23), whereby the rotor (1) is stopped when the values in the counter (23) and in the indicator (28) are the same and

– a further connection of the counter (23) to the third store (15a) for the angular position of unbalance via a comparison unit (27), in which on subsequent rotation of the rotor (1) into the unbalance position the content of the counter (23) is compared with the third store (15a) and when the values are the same the rotor (1) is rotated into the unbalance position.

6. A balancing machine according to claim 5, characterised in that the pulse generator (22) is so arranged and formed that the pulses delivered by it occur at an interval of less than three angle degrees rotation of the rotor (1).

## Revendications

1. Procédé de transmission de la position angulaire mesurée du balourd d'un rotor (1) à examiner à sa périphérie dans un plan d'équilibrage et pour la détermination de l'importance du balourd, selon lequel

- le rotor (1) est mis en rotation dans une machine d'équilibrage qui ne comporte aucune partie animée d'un mouvement synchrone avec le rotor (1)
- on détermine la position angulaire du balourd
- à partir d'une première valeur représentant le périmètre du rotor dans le plan d'équilibrage, dans des unités sans dimension, ainsi que de la position angulaire établie, on forme une seconde valeur de comptage qui donne la position du balourd dans les ensembles connus, caractérisé en ce que
- pour l'établissement de la première valeur de comptage, on produit une série d'impulsions équidistantes à partir d'un générateur d'impulsions (22) couplé au rotor (1), le comptage des impulsions, déterminé d'après un nombre d'impulsions établi, qui correspondent à une rotation du rotor (1) à examiner prend fin et redémarre par une impulsion marche-arrêt
- l'impulsion stop sert simultanément de signal de référence pour un traitement des signaux de mesure contenant l'importance et la position angulaire du balourd
- la position angulaire du balourd obtenu sans dimension à partir du traitement et l'importance de ce balourd sont mémorisées
- l'entraînement du rotor (1) à examiner est déconnecté, le rotor est arrêté lors de l'égalité entre le nombre fixé et les nombres d'impulsions comptées, et
- ultérieurement, une fois le rotor arrété, on le fait tourner encore jusqu'à ce que les impulsions de comptage correspondent la position angulaire sans dimension mémorisée.

2. Procédé selon la revendication 1, caractérisé en ce que le nombre de révolutions du rotor (1) à examiner est compté jusqu'à l'arrêt.

3. Procédé selon la revendication 1 et/ou 2, caractérisé en ce que l'intervalle des séries d'impulsions est surveillé.

4. Procédé selon l'une ou plusieurs des revendications précédentes, caractérisé en ce que le nombre de tours du rotor (1) pendant la détermination du balourd est surveillé jusqu'à l'arrêt.

5. Machine d'équilibrage pour la mise en œuvre du procédé selon l'une ou plusieurs des revendications précédentes, comportant:
- un palier de rotor (2, 4) ,
- un entaînement pour le rotor (16 à 21) qui ne comporte aucune pièce tournant de façon synchrone avec ce rotor (1)
- des convertisseurs de mesure (5, 6) pour la production des signaux de mesure représentant l'effet du balourd sur le palier du rotor

- un circuit d'exploitation (7) pour la détermination de la position angulaire et de l'importance du balourd, caractérisé par

- un générateur d'impulsions (22) couplé au rotor à examiner (1) pour la production d'une série d'impulsions équidistantes correspondant à l'angle de rotation du rotor (1)

- un compteur marche avant-marche arrière (23) à l'entrée duquel sont amenées les impulsions du générateur (22)

- une première mémoire (26) dans laquelle est stocké un nombre fixe qui correspond au nombre d'impulsions représentant le périmètre du rotor (1) à examiner dans les plans d'équilibrage (12, 13)

- une liaison entre la sortie du compteur (23) et la première mémoire (26) pour le retour en arrière du compteur (23) par production du nombre d'impulsions stockées dans la première mémoire (26) et retransmission du signal de retour au circuit de traitement (7) et pour un nouveau départ du compteur (23)

- une liaison entre le circuit de traitement (7) dans lequel le balourd est déterminé en position et en importance, avec une deuxième mémoire (14) avec affichage pour l'importance du balourd dans chaque plan et avec une troisième mémoire 15a avec affichage pour chaque plan de la position angulaire du balourd

- un interrupteur (51) grâce auquel après mémorisation des valeurs dans les deuxième et troisième mémoires (14, 15a) et déconnexion du moteur d'entraînement (17) est mis en circuit un autre générateur d'impulsions (50) qui est relié à un bloc correcteur (52),

- une liaison (53) de la sortie de l'unité de connection (52) avec un indicateur (28) pour la compensation de l'erreur qui se produit à partir d'une différence éventuelle entre le comptage donné dans la première mémoire (26) et le périmètre réel du rotor (1) dans les plans d'équilibrage

- une liaison entre l'indicateur (28) et le compteur (23), par laquelle le rotor (1) est arrété en cas d'identité des valeurs dans le compteur (23) et l'indicateur (28), et

- une autre liaison du compteur (23) avec la troisième mémoire (15a) pour la position angulaire du balourd sur un ensemble de comparaison (27) dans lequel lors de la rotation suivante du rotor (1) dans la position du balourd, le contenu du compteur (23) est comparé à la troisième mémoire (15a) et en cas d'identité des valeurs, on amène par rotation le rotor (1) dans la position du balourd.

6. Machine d'équilibrage selon la revendication 5, caractérisée en ce que le générateur d'impulsions (22) est placé et constitué de façon telle que les impulsions qu'il délivre se produisent avec un intervalle inférieur à une rotation de trois degrés d'angle du rotor (1).

Fig.

0 150 274